# EUROPÄISCHE PATENTSCHRIFT

(11) **EP 2 130 010 B1**
(45) Veröffentlichungstag und Bekanntmachung des Hinweises auf die Patenterteilung: **10.04.2013**
(21) Anmeldenummer: 08716909.0
(22) Anmeldetag: 18.02.2008
(51) Int. Cl.: G01H 1/00

(54) **VIBRATIONSDOSIMETER ZUR ERMITTLUNG DER VIBRATIONSBELASTUNG**
VIBRATION DOSIMETER FOR DETERMINING VIBRATIONAL LOADING
DOSIMÈTRE DE VIBRATIONS SERVANT À DÉTERMINER LA DOSE VIBRATOIRE REÇUE

(30) Priorität: 26.03.2007 DE 102007014893
(43) Veröffentlichungstag der Anmeldung: 09.12.2009
(73) Patentinhaber: Robert Bosch GmbH, 70442 Stuttgart (DE)
(72) Erfinder: ROTH, Markus, 73117 Wangen (DE); STRASSER, Andreas, 73635 Rudersberg (DE)
(86) Internationale Anmeldenummer: PCT/EP2008/051943
(87) Internationale Veröffentlichungsnummer: WO 2008/116701

(56) Entgegenhaltungen:
- WO-A-2007/098980
- DE-C1- 4 314 464
- US-A- 6 006 164
- US-A1- 2005 000 998

## Beschreibung

Die Erfindung bezieht sich auf ein Vibrationsdosimeter zur Ermittlung der Vibrationsbelastung von Personen, die durch den Betrieb eines Werkzeugs mechanischen Schwingungen ausgesetzt sind, nach dem Anspruch 1.

### Stand der Technik

In der DE 101 19 252 A1 wird eine Einrichtung zur personengebundenen Messung von Schwingungsbelastungen beschrieben, die auf eine Bedienungsperson einwirken, welche an einem Werkzeug arbeitet. Die Einrichtung umfasst eine Schwingungssensorik sowie Kontaktsensoren, über die ein Kontakt der Bedienperson mit der schwingungserzeugenden Maschine festgestellt werden soll.

Aufgrund gesetzlicher Vorschriften müssen bei Arbeiten mit schwingungserzeugenden Maschinen Auslöse- und Expositionsgrenzwerte berücksichtigt werden, die eine maximal zulässige, tägliche Schwingungsbelastung kennzeichnen und nicht überschritten werden dürfen. Diese Grenzwerte hängen von gerätespezifischen Vibrationskennwerten ab, die einer unterschiedlich starken Schwingungserzeugung am jeweiligen Werkzeug Rechnung tragen. Für eine korrekte Ermittlung der Vibrationsbelastung ist daher die Berücksichtigung des gerätetypischen Vibrationskennwertes unerlässlich.

Die DE 43 14 464 C1 zeigt ein elektrisches Schaltgerät für die Steuerung eines eine Bildröhre umfassenden Bildwiedergabegerätes wie zum Beispiel ein Fernseher. Über das Schaltgerät sollen zeitlich begrenzte Fernsehzeiten eingestellt werden können, um speziell für Kinder die Nutzungsdauer von Fernsehgeräten zu begrenzen. Über eine Dateneingabevorrichtung können von außen personenindividuelle Grenzzeiten und Zeitperioden eingegeben werden.

Die nachveröffentlichte WO 20071098980 A1 zeigt ein Vibrationsdosimeter mit einer Ermittlungseinrichtung zum Ermitteln der effektiven täglichen Betriebsdauer eines Arbeitsmittels, eine Recheneinrichtung zum Berechnen einer täglichen Arbeitszeit bis zum Erreichen eines vorgeschriebenen Auslösewerts bzw. Expositionsgrenzwert der Vibrationsbelastung sowie eine Vergleichseinrichtung zum Vergleichen der ermittelten effektiven täglichen Betriebsdauer mit der berechneten täglichen Arbeitszeit bis zum Erreichen des Auslöse- bzw. Expositionsgrenzwerts.

### Offenbarung der Erfindung

Der Erfindung liegt die Aufgabe zugrunde, mit einfach durchzuführenden Maßnahmen ein Vibrationsdosimeter zur Ermittlung der Vibrationsbelastung von Personen zu schaffen, die durch den Betrieb eines Werkzeugs mechanischen Schwingungen ausgesetzt sind, wobei sich das Vibrationsdosimeter durch eine hohe Messgenauigkeit und zugleich durch eine hohe Bedienerfreundlichkeit auszeichnen soll.

Diese Aufgabe wird erfindungsgemäß mit den Merkmalen des Anspruches 1 gelöst. Die Unteransprüche geben zweckmäßige Weiterbildungen an.

Das erfindungsgemäße Vibrationsdosimeter zur Ermittlung der Vibrationsbelastung von Personen, die durch den Betrieb eines Werkzeugs mechanischen Schwingungen ausgesetzt sind, weist eine Betriebsdauer-Ermittlungseinrichtung zur Ermittlung der effektiven Betriebsdauer des Werkzeugs auf, eine Rechnereinrichtung zum Berechnen der zulässigen Arbeitszeit an dem Werkzeug und eine Vergleichseinrichtung zum Vergleichen der effektiven Betriebsdauer mit der zulässigen Arbeitszeit. Die zulässige Arbeitszeit hängt von dem werkzeugspezifischen Vibrationskennwert ab, mit dem die von dem jeweiligen Werkzeug erzeugten und produktspezifischen Schwingungen charakterisiert werden. Über den Vibrationskennwert ist sichergestellt, dass bei Werkzeugen mit starken Vibrationen die maximal zulässige Arbeitszeit auf einen geringeren Wert gesetzt wird als bei Werkzeugen mit niedrigeren Vibrationen.

Um einerseits eine flexible Anwendung des Vibrationsdosimeters auf verschiedene Werkzeugtypen zu ermöglichen und andererseits die Handhabung soweit wie möglich zu vereinfachen, ist erfindungsgemäß vorgesehen, dass der werkzeugspezifische Vibrationskennwert über eine Schnittstelle in das Vibrationsdosimeter eingelesen wird. Eine manuelle Eingabe des Vibrationskennwertes ist somit nicht erforderlich. Das Einlesen des Kennwerts über die Schnittstelle erfolgt automatisch nach Aktivierung des Vibrationsdosimeters, wodurch Fehleingaben ausgeschlossen sind. Das Einlesen des Kennwertes über die Schnittstelle ermöglicht einen einfachen Wechsel des Vibrationsdosimeters zwischen verschiedenen Werkzeugen ohne die Notwendigkeit einer manuellen Eingabe des Kennwertes.

Die Schnittstelle kann auf verschiedene Art und Weise realisiert sein. Infrage kommt sowohl eine drahtlose Kommunikationsschnittstelle als auch eine hardwaregebundene Schnittstelle, wobei bei drahtlosen Schnittstellen beispielsweise Bluetooth-, WLan-, Infrarot-, Barcode-, UPC-(Universal Product Code), RFID- (Radio Frequency Identification) oder Funk-Schnittstellen in Betracht kommen. Bei hardwaregebundenen Schnittstellen werden die jeweiligen Schnittstellenteile am Werkzeug und am Vibrationsdosimeter im oder am Gehäuse des Werkzeugs in Kommunikationsverbindung gebracht.

Über die Schnittstelle können ggf. auch zusätzliche Gerätefunktionen übertragen werden, beispielsweise verschiedene Betriebszustände des Werkzeugs. So können bei Bohrhämmern der Schlagbohrbetrieb und der Meißelbetrieb unterschieden werden, die verschiedenartige Belastungen auf die bedienende Person ausüben.

Die Übertragung über die Schnittstelle kann sowohl vom Vibrationsdosimeter in Richtung auf das Werkzeug als auch in Gegenrichtung erfolgen. Der Vibrationskennwert wird von einem Speicher im Werkzeug oder im Netzstecker auf das Vibrationsdosimeter übertragen und dort einer weiteren Verarbeitung unterzogen, in Gegenrichtung können von dem Vibrationsdosimeter über die Schnittstelle beispielsweise bei Erreichen eines Grenzwertes Deaktivierungssignale zum Abschalten des Werkzeugs übertragen werden.

Um die Vibrationsbelastung auf eine Bedienungsperson kumulativ ermitteln zu können, ist im Vibrationsdosimeter zweckmäßig eine Speichereinrichtung vorgesehen, in der insbesondere die aktuelle Betriebsdauer und/oder aktuelle Belastungswerte abgespeichert werden können. Dadurch ist es möglich, bei einem Wechsel des Werkzeugs das Vibrationsdosimeter personengebunden auf das neue Werkzeug zu übertragen, wobei die Betriebsdauer bzw. die Belastungsdauer aus dem vorangegangenen Arbeitsvorgang über die Speichereinrichtung im Vibrationsdosimeter berücksichtigt und zu der aktuellen Vibrationsbelastung hinzuaddiert werden können.
Über die Berücksichtigung des jeweils geltenden Vibrationskennwerts lässt sich kumulativ eine zulässige Gesamtbelastung ermitteln, ungeachtet eines etwaigen Wechsels des Werkzeugtyps. Der jeweils werkzeugspezifische Belastungswert ermittelt sich hierbei aus der effektiven Betriebsdauer und dem jeweiligen Vibrationskennwert.

Das Vibrationsdosimeter weist darüber hinaus vorteilhafterweise auch eine Anzeigeeinrichtung auf, um den aktuellen Status der Vibrationsbelastung darzustellen.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung eines Handwerkzeugs, mit einem aufsetzbaren Vibrationsdosimeter, das über eine Schnittstelle mit einer Steuerungseinrichtung des Werkzeugs zu verbinden ist,
- Fig. 2: eine schematisierte Darstellung des Vibrationsdosimeters einschließlich diverser Schnittstellen,
- Fig. 3: das zwischen den Netzstecker des Handwerkzeugs und die Steckdose zwischengeschaltete Vibrationsdosimeter,
- Fig. 4: das Vibrationsdosimeter aus Fig. 3 einschließlich eingestecktem Netzstecker in vergrößerter Darstellung,
- Fig. 5: der Netzstecker des Handwerkzeugs in zwei Ansichten.

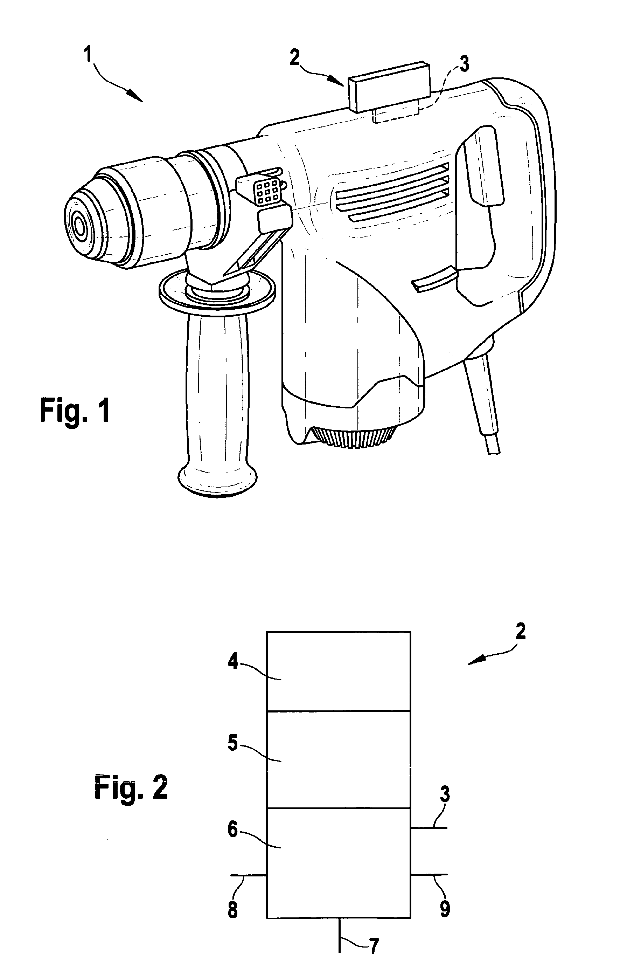

Bei dem in Fig. 1 dargestellten Werkzeug 1 handelt es sich um eine handgeführte Werkzeugmaschine, insbesondere einen Bohrhammer. Das Vibrationsdosimeter 2 wird auf das Gehäuse des Werkzeugs 1 aufgesetzt und ist mit einer Schnittstelle 3 versehen, die in Kommunikationsverbindung mit einem Steuerungsgerät tritt, welches im Werkzeug 1 angeordnet ist. Die Schnittstelle 3 ist bevorzugt als drahtlose Kommunikationsschnittstelle ausgeführt, beispielsweise als Bluetooth- oder Infrarot-Schnittstelle. Gegebenenfalls kommt aber auch eine Hardwareverbindung der Schnittstelle 3 am Vibrationsdosimeter 2 mit einer zugeordneten, geräteseitigen Schnittstelle des Steuergerätes in Betracht. Das Vibrationsdosimeter 2 wird in der Weise am Gehäuse des Werkzeugs 1 angeordnet, dass ein versehentliches Lösen des Dosimeters durch die Vibrationen und Schwingungen des Werkzeugs ausgeschlossen ist.

Gegebenenfalls kommt auch eine Anordnung des
Vibrationsdosimeters 2 innerhalb des Gehäuses des Werkzeugs in Betracht. Auch in diesem Fall ist aber vorteilhaft das Vibrationsdosimeter lösbar mit dem Steuergerät im Werkzeug zu verbinden.

Wie der schematisierten Darstellung gemäß Fig. 2 zu entnehmen, weist das Vibrationsdosimeter 2 verschiedene Baueinheiten auf, die untereinander bzw. mit der Steuerungseinrichtung im Werkzeug kommunizieren. Das Vibrationsdosimeter 2 besteht aus einem Netzteil 4, einer Anzeige- und Bedieneinrichtung 5 und einer Auswerteelektronik 6, die verschiedene Rechnerfunktionen ausführt bzw. umfasst. In der Auswerteelektronik 6 ist eine Betriebsdauer-Ermittlungseinrichtung zur Ermittlung der effektiven Betriebsdauer des Werkzeugs realisiert, außerdem befindet sich in der Auswerteelektronik eine Recheneinrichtung zur Berechnung der zulässigen Arbeitszeit an dem Werkzeug als Funktion eines werkzeugspezifischen Vibrationskennwerts. Dieser Vibrationskennwert wird automatisch über die Schnittstelle 3 vom Steuergerät des jeweiligen Werkzeugs eingelesen, wodurch sich eine manuelle Eingabe des Vibrationskennwerts in das Vibrationsdosimeter 2 erübrigt. Vorteilhafterweise umfasst die Auswerteelektronik 6 auch eine Speichereinrichtung zum Abspeichern und Wiederauslesen der Betriebsdauer und/oder von Belastungswerten, die bei Arbeiten an dem Werkzeug bereits angefallen sind und für eine Wiederaufnahme der Arbeit am gleichen Werkzeug oder einem anderen Werkzeug kumulativ berücksichtigt werden. In die Auswerteelektronik kann außerdem eine Abschalteinrichtung zum Abschalten des Werkzeugs bei Überschreitung eines Grenzwerts integriert sein.

Die Anzeige- und Bedieneinrichtung 5 dient zur Darstellung des aktuellen Status der Vibrationsbelastung sowie der manuellen Eingabe bzw. Steuerung des Vibrationsdosimeters.

Die Schnittstelle 3 ist als drahtlose
Kommunikationsschnittstelle ausgeführt. Zusätzlich ist eine Hardware-Schnittstelle 8 vorgesehen, die mit einer zugeordneten Schnittstelle auf Seiten der Steuereinrichtung im Werkzeug verbunden werden kann, so dass ein Datenaustausch auch über die Hardware-Schnittstelle 8 durchgeführt werden kann.

Des Weiteren ist eine PC-Schnittstelle 7 zum Datenaustausch mit einem Computer vorgesehen.

Über einen Netzstecker 9 ist das Vibrationsdosimeter mit einer Stromquelle zu verbinden.

In der Auswerteelektronik 6 wird die effektive Betriebsdauer des Werkzeugs ermittelt, insbesondere als Funktion von Messwerten, die von einer Messeinheit des Vibrationsdosimeters zur Ermittlung der Vibrationen des Werkzeugs dienen. Die Messeinheit misst beispielsweise die auftretenden Beschleunigungen. Die zulässige, maximale Arbeitszeit an dem Werkzeug wird in der Auswerteelektronik als Funktion des werkzeugspezifischen Vibrationskennwerts ermittelt, der über die Schnittstelle in das Vibrationsdosimeter eingelesen wird. Anschließend wird in der Auswerteelektronik ein Vergleich mit der zuvor ermittelten effektiven Betriebsdauer durchgeführt, wobei je nach Ergebnis des Vergleichs weitere Maßnahmen wie die Anzeige in der Anzeigeeinrichtung oder eine Deaktivierung des Werkzeugs durchgeführt werden.

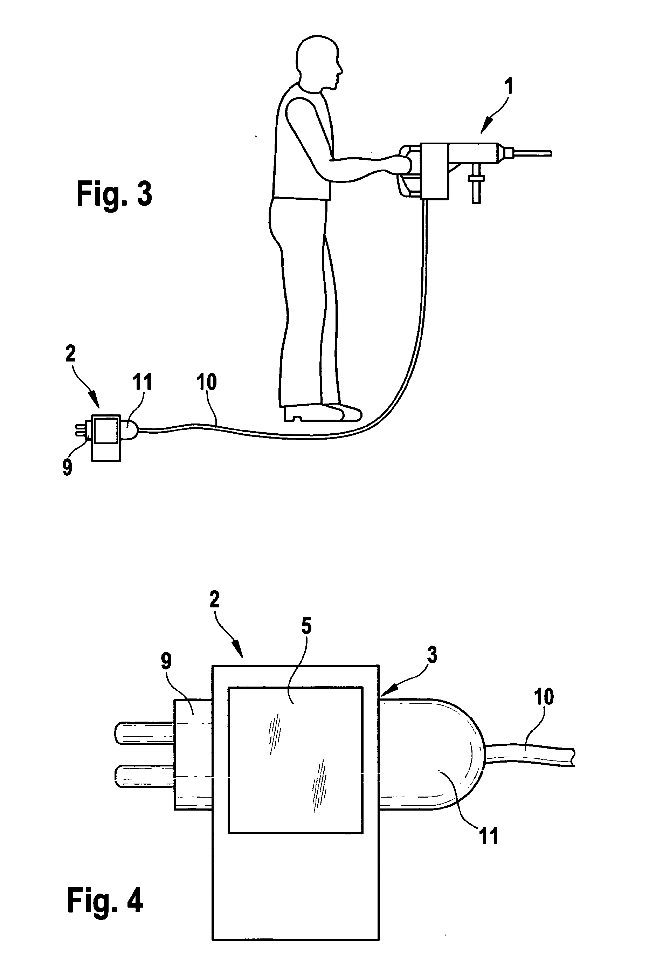

In den Figuren 3 bis 5 ist ein weiteres Ausführungsbeispiel dargestellt, bei dem das Vibrationsdosimeter 2 sich zwischen dem Netzstecker 11 des Werkzeugs 1 und der Steckdose befindet. Der Netzstecker 11 am Stromkabel 10 des Werkzeuges 1 wird in die Schnittstelle 3 (Fig. 4) des Vibrationsdosimeters 2 eingesteckt, das über den Netzstecker 9 verfügt, welcher in die Steckdose eingesteckt wird. Gemessen wird in diesem Fall von dem Vibrationsdosimeter 2 die Stromaufnahme des Werkzeuges 1.

Wie Fig. 4 zu entnehmen, verfügt das Vibrationsdosimeter 2 über ein verhältnismäßig großes Display als Bestandteil der Anzeige- und Bedieneinrichtung 5. In dem Display wird der aktuelle Belastungszustand dargestellt.

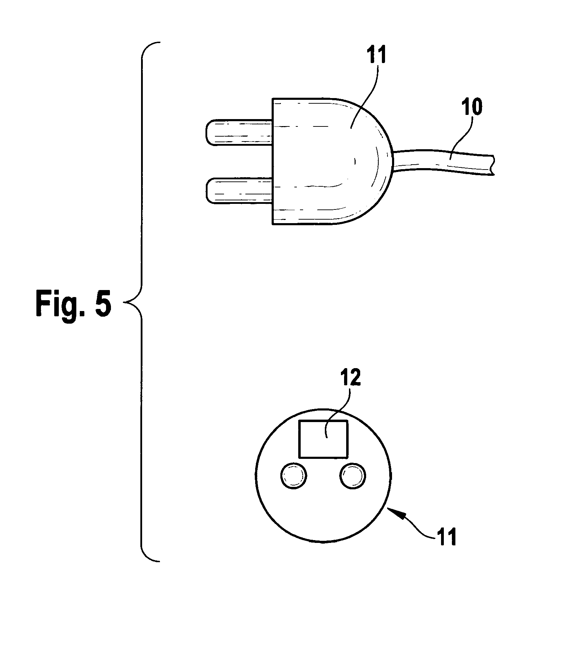

Am Netzstecker 11 des Werkzeuges befindet sich, wie Fig. 5 zu entnehmen, ein RFID-Chip 12, über den der werkzeugspezifische Vibrationskennwert des Werkzeuges 1 auf das Vibrationsdosimeter 2 zur Weiterverarbeitung übertragen wird. Der Vibrationskennwert wird von dem RFID-Chip 12 über die Schnittstelle 3 in die Auswerteelektronik des Vibrationsdosimeters eingespeist.

## Patentansprüche

1. Vibrationsdosimeter zur Ermittlung der Vibrationsbelastung von Personen, die durch den Betrieb eines Werkzeugs (1) mechanischen Schwingungen ausgesetzt sind, mit einer Betriebsdauer-Ermittlungseinrichtung zur Ermittlung der effektiven Betriebsdauer des Werkzeugs (1), einer Schnittstelle (3) zum Einlesen eines werkzeugspezifischen Vibrationskennwerts von einem Steuergerät des Werkzeugs (1), einer Rechnereinrichtung zum Berechnen der zulässigen Arbeitszeit an dem Werkzeug (1) als Funktion des werkzeugspezifischen Vibrationskennwerts, einer Vergleichseinrichtung zum Vergleichen der effektiven Betriebsdauer mit der zulässigen Arbeitszeit, und einer Anzeigeeinrichtung (5) zum Anzeigen des aktuellen Status der Vibrationsbelastung.

2. Vibrationsdosimeter nach Anspruch 1,
**dadurch gekennzeichnet, dass** die Schnittstelle (3) als drahtlose Kommunikationsschnittstelle ausgeführt ist, beispielsweise als Bluetooth-, WLan-, Infrarot-, Barcode, UPC- (Universal Product Code), RFID- oder Funk-Schnittstelle.

3. Vibrationsdosimeter nach Anspruch 1 oder 2,
**dadurch gekennzeichnet, dass** über die Schnittstelle (3) zusätzliche Gerätefunktionen übertragbar sind.

4. Vibrationsdosimeter nach Anspruch 3,
**dadurch gekennzeichnet, dass** über die Schnittstelle (3) verschiedene Betriebszustände des Werkzeugs (1) übertragbar sind, beispielsweise Bohrhammerbetrieb und Meiselhetrieb.

5. Vibrationsdosimeter nach Anspruch 3 oder 4,
**dadurch gekennzeichnet, dass** über die Schnittstelle (3) im Falle der Überschreitung eines Grenzwerts ein Deaktivierungssignal auf das Werkzeug (1) zur Deaktivierung des Antriebsmotors übertragbar ist.

6. Vibrationsdosimeter nach einem der Ansprüche 1 bis 5,
**dadurch gekennzeichnet, dass** die Betriebsdauer-Ermittlungseinrichtung eine Messeinheit zur Ermittlung der auftretenden Beschleunigungen umfasst.

7. Vibrationsdosimeter nach einem der Ansprüche 1 bis 6,
**dadurch gekennzeichnet, dass** eine Speichereinrichtung zum Abspeichern und Auslesen der Betriebsdauer und/oder von Belastungswerten vorgesehen ist, die die aktuelle Vibrationsbelastung der bedienenden Person repräsentieren.

8. Vibrationsdosimeter nach Anspruch 7,
**dadurch gekennzeichnet, dass** der aktuelle Belastungswert (b) aus der effektiven Betriebsdauer und dem werkzeugspezifischen Vibrationskennwert ermittelbar ist.

9. Vibrationsdosimeter nach einem der Ansprüche 1 bis 8,
**dadurch gekennzeichnet, dass** eine Abschalteinrichtung zum Abschalten des Werkzeugs (1) bei Überschreitung eines Grenzwerts vorgesehen ist.

10. Vibrationsdosimeter nach einem der Ansprüche 1 bis 9,
**dadurch gekennzeichnet, dass** eine zusätzliche Schnittstelle (7) zum Anschluss an einen externen Computer vorgesehen ist.

## Claims

1. Vibration dosimeter for ascertaining the vibration load on people who are exposed to mechanical vibrations as a result of the operation of a tool (1), having an operating period ascertainment device for ascertaining the effective operating period of the tool (1), having an interface (3) for reading in a tool-specific vibration parameter from a controller of the tool (1), having a computer device for calculating the admissible working time on the tool (1) as a function of the tool-specific vibration parameter, having a comparison device for comparing the effective operating period with the admissible working time, and having a display device (5) for indicating the current status of the vibration load.

2. Vibration dosimeter according to Claim 1, **characterized in that** the interface (3) is in the form of a wireless communication interface, for example in the form of a Bluetooth, WLan, infrared, barcode, UPC (Universal Product Code), RFID or radio interface.

3. Vibration dosimeter according to Claim 1 or 2, **characterized in that** the interface (3) can be used to transmit additional appliance functions.

4. Vibration dosimeter according to Claim 3, **characterized in that** the interface (3) can be used to transmit various operating states of the tool (1), for example hammer drill mode and chisel mode.

5. Vibration dosimeter according to Claim 3 or 4, **characterized in that** the interface (3) can be used to transmit a deactivation signal to the tool (1) for the purpose of deactivating the drive motor when a limit value is exceeded.

6. Vibration dosimeter according to one of Claims 1 to 5,
**characterized in that** the operating period ascertainment device comprises a measuring unit for ascertaining the accelerations which arise.

7. Vibration dosimeter according to one of Claims 1 to 6,
**characterized in that** a memory device is provided for the purpose of storing and reading the operating period and/or load values which represent the present vibration load of the operating person.

8. Vibration dosimeter according to Claim 7, **characterized in that** the present load value (b) can be ascertained from the effective operating period and from the tool-specific vibration parameter.

9. Vibration dosimeter according to one of Claims 1 to 8,
**characterized in that** a shutdown device is provided for the purpose of shutting down the tool (1) when a limit value is exceeded.

10. Vibration dosimeter according to one of Claims 1 to 9,
**characterized in that** an additional interface (7) is provided for the purpose of connection to an external computer.

## Revendications

1. Dosimètre de vibrations destiné à déterminer la charge de vibration de personnes qui sont exposées à des vibrations mécaniques du fait du fonctionnement d'un outil (1), comprenant un dispositif de détermination du temps de fonctionnement destiné à déterminer le temps de fonctionnement effectif de l'outil (1), une interface (3) destinée à lire une valeur caractéristique de vibration spécifique à l'outil en provenance d'un appareil de commande de l'outil (1), un dispositif informatique destiné à calculer le temps admissible de travail sur l'outil (1) en fonction de la valeur caractéristique de vibration spécifique à l'outil, un dispositif de comparaison destiné à comparer le temps de fonctionnement effectif au temps de travail admissible, et un dispositif d'affichage (5) destiné à afficher l'état courant de la charge de vibration.

2. Dosimètre de vibrations selon la revendication 1, **caractérisé en ce que** l'interface (3) est réalisée sous la forme d'une interface de communication sans fil, telle qu'une interface Bluetooth, WiFi, infrarouge, de lecture de code à barres, UPC (Universal Product Code), RFID ou radio.

3. Dosimètre de vibrations selon la revendication 1 ou 2, **caractérisé en ce que** des fonctions d'appareil supplémentaires peuvent être transmises par l'intermédiaire de l'interface (3).

4. Dosimètre de vibrations selon la revendication 3, **caractérisé en ce que** différents états de fonctionnement de l'outil (1) peuvent être transmis par l'intermédiaire de l'interface (3), par exemple, un mode de fonctionnement de perceuse à percussion et un mode de fonctionnement de burin.

5. Dosimètre de vibrations selon la revendication 3 ou 4, **caractérisé en ce qu'**un signal de désactivation peut être transmis à l'outil (1) par l'intermédiaire de l'interface (3) pour désactiver le moteur d'entraînement en cas de dépassement d'une valeur limite.

6. Dosimètre de vibrations selon l'une quelconque des revendications 1 à 5, **caractérisé en ce que** le dispositif de détermination de temps de fonctionnement comprend une unité de mesure destinée à déterminer les accélérations qui se produisent.

7. Dosimètre de vibrations selon l'une quelconque des revendications 1 à 6, **caractérisé en ce qu'**il est prévu un dispositif de stockage destiné à stocker et à lire la durée de fonctionnement et/ou des valeurs de charge qui représentent la charge de vibration courante de l'utilisateur.

8. Dosimètre de vibrations selon la revendication 7, **caractérisé en ce que** la valeur courante de la charge (b) peut être déterminée à partir du temps de fonctionnement effectif et de la valeur caractéristique de vibration spécifique à l'outil.

9. Dosimètre de vibrations selon l'une quelconque des revendications 1 à 8, **caractérisé en ce qu'**il est prévu un dispositif d'interruption destiné à interrompre le fonctionnement de l'outil (1) en cas de dépassement d'une valeur limite.

10. Dosimètre de vibrations selon l'une quelconque des revendications 1 à 9, **caractérisé en ce qu'**il est prévu une interface supplémentaire (7) permettant un raccordement à un ordinateur externe.
